# EUROPEAN PATENT SPECIFICATION

(11) **EP 3 818 837 B1**
(45) Date of publication and mention of the grant of the patent: **30.08.2023**
(21) Application number: 19207614.9
(22) Date of filing: 07.11.2019
(51) Int. Cl.: A23L 19/20

(54) **METHOD FOR REDUCING THE CONCENTRATION OF OLEUROPEIN AND FOR FORMATION AND PRESERVATION OF THE CONCENTRATION OF HYDROXYTYROSOL AND TYROSOL IN OLIVES**
VERFAHREN ZUR REDUZIERUNG DER OLEUROPEINKONZENTRATION UND BILDUNG UND ERHALTUNG DER HYDROXYTHROSOL- UND TYROSOLKONZENTRATION IN OLIVEN
PROCEDE DE REDUCTION DE LA CONCENTRATION EN OLEUROPEINE, DE LA FORMATION ET DE LA CONSERVATION DE LA CONCENTRATION EN HYDROXYTHROSOL ET EN TIROSOL DANS DES OLIVES

(43) Date of publication of application: 12.05.2021
(73) Proprietor: Rumiz, Michel, P-7170-107 Redondo (PT)
(72) Inventor: Rumiz, Michel, P-7170-107 Redondo (PT)
(74) Representative: Lourenço Martinho do Rosário, Ana Margarida

(56) References cited:
- AU-A1- 2007 203 440
- ES-A1- 2 186 467
- ES-B1- 2 186 467
- US-A1- 2014 227 198

## Description

### Technical Field

The invention described in this document concerns to a method to reduce/eliminate the natural bitterness of olives, more specifically a method to reduce/eliminate the concentration of oleuropein in olives. In addition, the method enables the formation and preservation of the concentration of hydroxytyrosol and tyrosol, being one of the applications of this method the production of table olives.

### Context of the Invention

The olive is the fruit of the olive tree of the species belonging to the Oleaceae family. The fruit is considered organoleptically unpleasant for consumption *in natura* because it has a bitter taste, being that oleuropein -a glycosylated seco-iridoid naturally present in the olives-the element responsible for this fact.

According to the International Olive Council, table olives are defined as the product prepared from healthy fruit, subjected to treatment to eliminate the natural bitterness present in the fruit, and preserved by natural fermentation or heat treatment, with or without preservatives, packaged with or without covering liquid. The olives are classified according to their degree of ripeness into the categories of green, mixed and black olives.

The main objective of olive processing is to remove the fruit's bitterness by hydrolysis of the phenolic compounds, especially oleuropein, and to acquire specific flavours, aromas and textures. The most widely used and most economically significant methods of processing table olives are: the Greek method, also known as naturally fermented olives, the method to produce green olives, known as the Spanish or Sevillian-style method, and the method of producing oxidized black olives, known as the Californian or American-style method.

The fruits, processed by any of the three methods mentioned above, are subjected to water washing processes that advance or delay brining and/or treating with a NaOH solution for the elimination of bitter taste by hydrolysis and diffusion of phenols such as oleuropein in water. Although the decrease/disappearance of oleuropein concentration causes an increase in hydroxytyrosol concentration, water washes eventually lead to the partial loss of phenolic compounds, in particular hydroxytyrosol.

Studies on phenolic compounds present in olives and in olive leaves have led researchers to recognize their biological properties and the health benefits they have. This way, the bioactive compounds present in olives and olive oil have been recognized as important targets for the pharmaceutical and food industry.

Hydroxytyrosol, one of the most active phenols among those found in a natural form in olives and, above all, in their vegetation water and/or olive pomace, is obtained by chemical and/or enzymatic hydrolysis of oleuropein during the production process of table olives, and/or by crushing and beating of olive pomace. It is also found in large quantities in the solutions and waters resulting from washing during the production of table olives. It is a very interesting compound due to its antioxidant properties, owing its activity mainly to the characteristic o-diphenol functional group of biophenols, which reveal some beneficial characteristics for human health and food conservation, in addition to playing an important role in defence mechanisms against pathogens and insects in olives. However, using the currently known processes, much of the hydroxytyrosol is lost during the production of table olives or olive oil due to the chemical hydrolysis or to dragging by the washing water.

Treatment methods used in the industry include treatment processes such as sodium hydroxide (NaOH) or sodium chloride (NaCl), which in addition to affecting the taste of the olives can adversely affect human health. It is therefore necessary to find new ways of eliminating oleuropein in olives that are as natural as possible and that will make it possible to reduce or eliminate the waste of hydroxytyrosol.

### Background of the Invention

A number of documents mention processes for reducing the concentration of oleuropein in olives. However, no solution has been detected enabling the concentration of oleuropein to be reduced in the same way as described in this document, while at the same time preserving and increasing the concentration of hydroxytyrosol and tyrosol in the olive in such an effective way.

Document PT894517E mentions a process for the industrial recovery of oleanolic and maslinic acids contained in the by-products of olive lees.

Document CN106565803 describes a process to extract oleuropein in dried and ground olive leaves using ethyl alcohol.

Documents CN10765233 and CN106967136 disclose methods to extract oleuropein from olive leaves.

Document CN107311972 discloses a method to extract oleuropein and scopoletin from olive leaves through fermentation and extraction processes using ethanol.

Document CN104311613 presents a method using counter-current chromatography to produce high purity oleuropein.

Document PT1315691E presents a method of obtaining a hydroxytyrosol-rich composition from vegetation water. Document PT103326A mentions a method for obtaining a concentrate rich in natural hydroxytyrosol from olive residues and by-products using clean technologies.

Document PT1369407E discloses a process for obtaining purified hydroxytyrosol from products and by-products derived from the olive tree by means of a chromatographic treatment.

Document PT1910257E presents a process for obtaining a natural hydroxytyrosol concentrate from olive oil production residues using clean technologies such as extraction with biocompatible solvents, fractionation with supercritical fluids and/or membrane processes (nanofiltration and reverse osmosis).

US 2014/227198 A1 discloses a composition used as nutraceutical composition or as dietary supplement to maintain health and comfort of healthy subject who is non-arthritic or non-diseased person, comprises olive extract comprising hydroxytyrosol, tyrosol and oleuropein.

ES 2 186 467 A1 discloses a method of preparing table olives by oxidation, wherein the olives are conserved in an acidic solution for months. The polyphenols, comprising hydroxytyrosol, tyrosol, and oleuropein, are diffused to the acidic solution, being removed from the olives.

### Advantages of the Invention

This invention presents a natural method for the reduction/elimination of the concentration of oleuropein and for the preservation and formation of hydroxytyrosol and tyrosol.

It is a method that does not require chemical products to be used, that avoids the loss of precious elements that are contained in the olive, and that has the ability to reduce, or even eliminate, the bitter taste of the olive through the reduction/elimination of the concentration of oleuropein.

Another unique advantage of this invention is the formation and preservation of hydroxytyrosol and tyrosol, which results in an olive less susceptible to bacterial action, since these compounds have antibacterial properties and act as natural preservatives of the olive.

Yet another advantage of this invention is that the olives produced by this method can be used as a source of hydroxytyrosol and tyrosol, through processes to extract these substances from olives or by-products of olives.

The advantages of this method comparing to those available on the market include:
- significant reduction or elimination of the waste of hydroxytyrosol and tyrosol;
- reduction or elimination of the concentration of oleuropein in olives without aqueous solutions;
- being a natural method to reduce the concentration without artificial additives;
- increase in the concentration of hydroxytyrosol and tyrosol in the olive;
- preservation of the natural texture and flavour of the olives;
- production of natural preservatives in the olive;
- antibacterial and bactericidal activity;
- application to all types of olives at all stages of ripeness.

### Brief description of drawings

These and other characteristics can be easily understood when the attached drawings are analysed, which should be considered mere examples and in no way restrictive of the scope of the invention.
Figure 1 shows tables with the concentrations measured at various stages of the process.

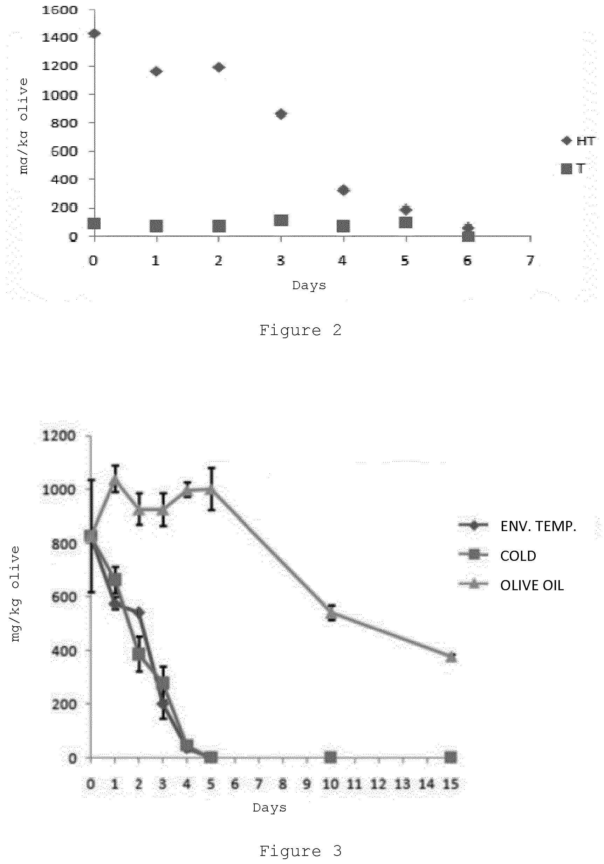

Figure 2 presents a graph showing the evolution of hydroxytyrosol and tyrosol concentrations measured after opening the container.
Figure 3 shows a graph concerning a stability test in different environments.

### Detailed description of the Invention

The present invention is defined by the claims.

This invention concerns a natural chemical/enzymatic method that naturally reduces/eliminates oleuropein concentrations in olives, providing the conditions for the preservation and formation of hydroxytyrosol and tyrosol in the olives. Because it is a method that does not require resorting to a liquid solution, it prevents hydroxytyrosol from being lost, something which normally occurs through chemical hydrolysis or through its transfer to the olive washing waters. Another characteristic of the method is that it does not use alkaline additives, such as sodium hydroxide, sodium chloride or phosphoric acid, which enables the taste and texture of the olives to be preserved, a factor of great importance when the method is used for the production of table olives.

The olives to be processed into table olives using this method do not require any prior treatment. The method may be applied to any variety of olive and at any stage of ripeness.

According to the present invention the method for reducing the concentration of oleuropein and for forming and preserving the concentration of hydroxytyrosol and tyrosol in olives, is characterized in that the method comprises the following steps:
a. placing the olives in a hermetically sealed container, to allow the formation of a confined atmosphere;
b. storing the olives without direct exposure to light for a period of 7 to 16 months and at a temperature below 20°C.

The first stage of the method involves placing the olives in a closed container to allow the formation of a confined atmosphere in order to limit the oxygen present and avoid unwanted fermentation. The olives should be compacted but not crushed. Thus, the density should register between 0,5 g/cm³ and 0,7 g/cm³ or, more specifically, between 0,55 g/cm³ and 0,65 g/cm³.

Since after opening the container the quantities of the compounds of interest, in particular hydroxytyrosol and tyrosol, start to decrease more or less significantly after the seventh day, the containers must be of an appropriate size to allow the storage of olives in an amount to be consumed within seven days.

After this step, the container is stored for a period of 3 to 18 months or, more specifically, for a period of 7 to 16 months, without direct exposure to light and at a temperature below 20°C. During this period, the container must be hermetically sealed.

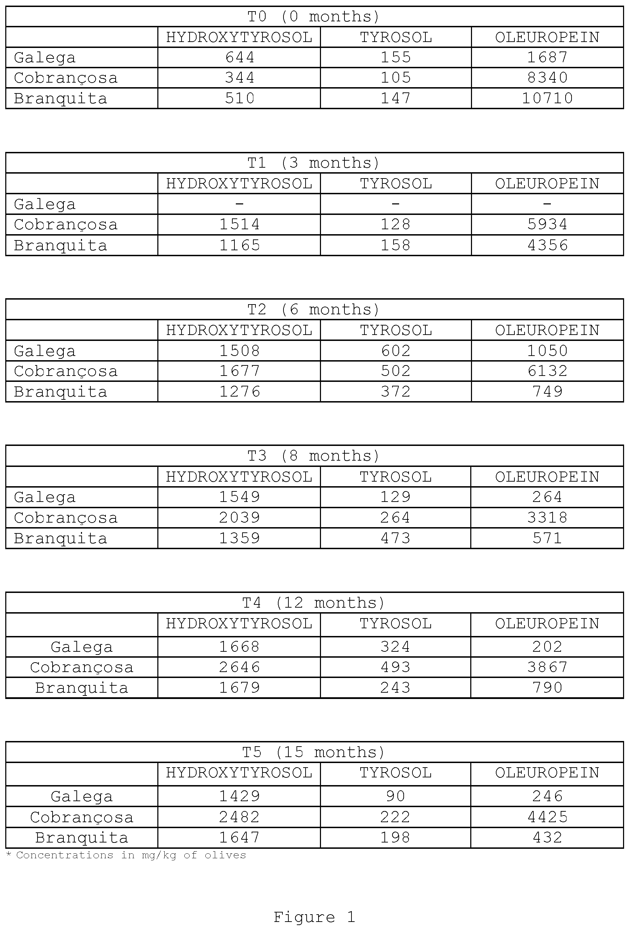

The length of time the olives remain in the container to reduce the levels of oleuropein to acceptable levels for table olives depends on the variety of the olives. As can be seen in figure 1, different varieties of olives have different requirements concerning how long they should remain in the container.

Thus, depending on the objective of the production, that is, whether the method is used for the production of table olives, for the use of hydroxytyrosol and tyrosol or for the use of its antibacterial and bactericidal capability, the length of the stay in the container depends directly on the variety of the olive.

It is thus found that the ideal period of stay in the container, in the above-mentioned conditions, that is, in a hermetically sealed container and at a temperature below 20°C, is between 7 and 16 months.

During the storage period, there is a reduction in the quantity of oleuropein and an increase in the quantity of hydroxytyrosol and tyrosol in the olive. After this treatment, the levels of oleuropein are at concentrations sufficiently low for the olives to be considered table olives.

If the method is used for the production of table olives, the olives must be consumed on the day on which their container is opened. However, if the container is filled with olive oil, the olives can be consumed within six days. Once these deadlines have passed, the olives are no longer useful as the quantities of the compounds of interest, in particular hydroxytyrosol and tyrosol, begin to decrease and eventually disappear.

This method can also be used in combination with other processes to reduce oleuropein, thus reducing the total time required for processing the olives. For example, this method can be used to reduce the initial amount of oleuropein present in olives, and subsequently be supplemented by another process with a higher extraction rate for lower concentrations of oleuropein. A disadvantage of using the method of this invention in combination with other methods is the possible reduction in the concentration of hydroxytyrosol and tyrosol in the olive when compared to the levels obtained from using only the method of this invention. Steps of the method:
a) placing the olives in a hermetically sealed container;
b) storing the olives without direct exposure to light for a period of 7 to 16 months and at a temperature below 20°C.

If the olives are to be used as table olives, and their consumption after opening the container does not occur on the same day, there is the additional step of:
c) filling the container with olive oil.

The present invention also relates to the use of the method of any of claims 1-4 in a table-olive production process and also to the use of the method of any of the claims 1 to hydroxytyrosol and tyrosol production process.

### Test results

Figure 1 shows the results obtained in a duly accredited laboratory, which show a decrease in the concentration of oleuropein and an increase in the concentration of hydroxytyrosol and tyrosol.

Three different varieties of olives were used to carry out the tests that prove the decrease in the concentration of oleuropein and the increase in the concentration of hydroxytyrosol and tyrosol: 'Galega', 'Cobrançosa' and 'Branquita', under the conditions mentioned above, with their phenolic profile being analysed over time at five sampling points, T0 - immediately after harvesting, T1 - after three months of treatment, T2 - after six months of treatment, T3 - after eight months of treatment, T4 - after 12 months of treatment and T5 - after 15 months of treatment.

From the results obtained, it can be seen that the 'Galega' variety has the best conditions to be used as a table olive, since it has the lowest oleuropein concentrations (0,2 g/kg) after 12 months. Although the 'Cobrançosa' variety is the one with the highest concentrations of oleuropein, it is also the one with the highest concentrations of tyrosol and hydroxytyrosol, making it the best suited for harnessing tyrosol and hydroxytyrosol.

## Claims

1. Method for reducing the concentration of oleuropein and for forming and preserving the concentration of hydroxytyrosol and tyrosol in olives, **characterized in that** the method comprises the following steps:
a) placing the olives in a hermetically sealed container, to allow the formation of a confined atmosphere;
b) storing the olives without direct exposure to light for a period of 7 to 16 months and at a temperature below 20°C.

2. Method according to claim 1, wherein the method includes the additional step:
c) filling the container with olive oil as a preservative after opening the container.

3. Method according to any of the previous claims, wherein the density of the olives placed in the container is between 0,5 g/cm³ and 0,7 g/cm³, more specifically, between 0,55 g/cm³ and 0,65 g/cm³.

4. Method according to any of the previous claims, wherein the length of stay in the hermetically sealed container depends directly on the type of olive.

5. Use of the method of any of the previous claims in a table-olive production process.

6. Use of the method of any of the claims 1 to 4 in a hydroxytyrosol and tyrosol production process.

## Patentansprüche

1. Verfahren zur Verringerung der Konzentration von Oleuropein und zur Bildung und Erhaltung der Konzentration von Hydroxytyrosol und Tyrosol in Oliven, **dadurch gekennzeichnet, dass** das Verfahren die folgenden Schritte umfasst:
a) Einlegen der Oliven in einen hermetisch verschlossenen Behälter, zur Bildung einer geschlossenen Atmosphäre;
b) Lagerung der Oliven ohne direkte Lichteinwirkung für einen Zeitraum von 7 bis 16 Monaten bei einer Temperatur unter 20 °C.

2. Verfahren nach Anspruch 1, wobei das Verfahren den folgenden zusätzlichen Schritt umfasst:
c) Auffüllen des Behälters mit Olivenöl als Konservierungsmittel nach dem Öffnen des Behälters.

3. Verfahren nach einem der vorhergehenden Ansprüche, wobei die Dichte der in den Behälter gegebenen Oliven zwischen 0,5 g/cm³ und 0,7 g/cm³, genauer zwischen 0,55 g/cm³ und 0,65 g/cm³ liegt.

4. Verfahren nach einem der vorhergehenden Ansprüche, wobei die Aufbewahrungsdauer in dem hermetisch verschlossenen Behälter direkt von der Olivensorte abhängt.

5. Anwendung des Verfahrens nach einem der vorhergehenden Ansprüche bei der Herstellung von Tafeloliven.

6. Anwendung des Verfahrens nach einem der Ansprüche 1 bis 4 bei der Gewinnung von Hydroxytyrosol und Tyrosol.

## Revendications

1. Procédé pour réduire la concentration d'oleuropéine et pour former et préserver la concentration d'hydroxytyrosol et de tyrosol dans les olives, **caractérisée en ce que** la méthode comprend les étapes suivantes :
a) placer les olives dans un récipient hermétiquement fermé, afin de permettre la formation d'une atmosphère confinée;
b) la conservation des olives sans exposition directe à la lumière pendant une période de 7 à 16 mois et à une température inférieure à 20°C.

2. Procédé selon la revendication 1, dans lequel le procédé comprend l'étape supplémentaire suivante:
c) remplir le récipient d'huile d'olive comme agent de conservation après l'ouverture du récipient.

3. Procédé selon l'une quelconque des revendications précédentes, dans lequel la densité des olives placées dans le récipient est comprise entre 0,5 g/cm³ et 0,7 g/cm³, plus précisément entre 0,55 g/cm³ et 0,65 g/cm³.

4. Procédé selon l'une quelconque des revendications précédentes, dans lequel la durée de conservation dans le récipient hermétiquement fermé dépend directement du type d'olive.

5. Utilisation du procédé de l'une quelconque des revendications précédentes dans un processus de production d'olives de table.

6. Utilisation du procédé décrit dans l'une quelconque des revendications 1 à 4 dans un procédé de production d'hydroxytyrosol et de tyrosol.
